# EUROPÄISCHE PATENTSCHRIFT

(11) **EP 1 803 344 B1**
(45) Veröffentlichungstag und Bekanntmachung des Hinweises auf die Patenterteilung: **30.09.2009**
(21) Anmeldenummer: 07005344.2
(22) Anmeldetag: 07.07.2005
(51) Int. Cl.: A01D 78/12

(54) **Schwadkreisel für eine Heuwerbungsmaschine**
Rotary swather for a hay-making machine
Andaineur pour une faneuse

(30) Priorität: 28.07.2004 DE 102004036671
(43) Veröffentlichungstag der Anmeldung: 04.07.2007
(62) Teilanmeldung aus: 05014723.0
(73) Patentinhaber: CLAAS Saulgau GmbH, 88348 Bad Saulgau (DE)
(72) Erfinder: Frick, Clemens, 88356 Ostrach (DE); Geng, Manfred, 88348 Bad Saulgau (DE)

(56) Entgegenhaltungen:
- EP-A1- 0 590 311
- GB-A- 1 325 484
- GB-A- 1 373 713

## Beschreibung

Die Erfindung betrifft einen Schwadkreisel für Kreiselschwader gemäß dem Oberbegriff des unabhängigen Anspruchs.

Kreiselschwader mit gesteuerten Zinkenarmen verfügen über mit Rechzinken bestückte Zinkenarme, die in bekannter Weise von Kurvenbahnen gesteuert werden. Aus Transport- oder Montagegründen werden die Zinkenarme zweiteilig ausgeführt, so dass diese getrennt voneinander transportiert werden können. Zur Herbeiführung ihrer Betriebsstellung werden beide Teile dann mittels einer Kupplungs- und Verriegelungseinrichtung miteinander gekoppelt.

Dazu werden die beiden Teile in einer Kupplungsverbindung nach dem Prinzip Welle und Kupplungsmuffe ineinander gesteckt. Dabei muss die Kupplungsverbindung infolge des Belastungszustandes funktional in der Lage sein Biegemomente, ein Drehmoment, Quer- und Längskräfte zu übertragen bzw. diesen Stand zu halten.

Die DE 42 32 768 A1 offenbart einen Kreiselschwader, bei dem die Tragarme der Rechzinken aus inneren, als Zinkentragarme bezeichneten Abschnitten und aus äußeren als Zinkenträger bezeichneten Abschnitten bestehen, wobei Zinkenträger und Zinkentragarme über eine Schiebesitzverbindung ineinander steckbar sind. Damit über diese Schiebesitzverbindung ein Drehmoment übertragen werden kann, weisen die Zinkenträger hohlkehlenförmige längsgerichtete Vertiefungen auf, die mit Schrägflächen der Zinkenarme zusammen wirken. Zur axialen Sicherung der Schiebesitzverbindung ist eine Querbohrung vorgesehen, durch die ein Sicherungsbolzen, eine Schraube oder ein Federstecker hindurch gesteckt wird. Infolge der dynamischen Belastung, welcher die Schiebesitzverbindung ausgesetzt ist, neigt die Kontaktfläche zwischen dem Sicherungsbolzen und den Elementen der Schiebesitzverbindung dazu, sich durch Verformung zu verändern, welches Stauchungen zu Folge hat. Dieses erschwert für den Fall der Demontage das Auseinanderziehen der beiden Abschnitte des Tragarms der Rechzinken bzw. auch umgekehrt das Ineinanderstecken bei der späteren Montage zur Wiederherstellung des Betriebszustands.

Aus der DE G86 24 527.9 ist ebenfalls eine Heuwerbungsmaschine, insbesondere ein Kreiselschwader mit abnehmbaren Zinkenträgern des Zinkenkreisels bekannt. Der abnehmbare Zinkenträger wird in seine Betriebsstellung gebracht, indem dieser in eine Führungsbuchse eingeführt wird, wobei die Führungsbuchse an ihrem äußeren Umfang im Bereich der Schiebesitzverbindung eine Mitnehmerlasche aufweist, die mit einer am Zinkenarm angebrachten Zuglasche Drehmoment übertragend in Wirkverbindung steht. Beide Teile, die Mitnehmerlasche und die Zuglasche sind mittels einer Arretierfeder gegeneinander gegen unbeabsichtigtes Lösen verriegelt. Diese Verriegelungsart vermeidet zwar die zuvor angesprochene Bohrung im Schiebesitzbereich, sie überträgt jedoch auch nicht das Drehmoment zur Abstützung und Betätigung der Rechzinken auf Ihrer Umlaufbahn um die Kreiselachse. Diese Funktion ist dem Zusammenwirken von Mitnehmer- und Zuglasche vorbehalten, und ebenfalls dazu zählt die Funktion als Widerlager zur Aufnahme der Zentrifugalkraft, welche die umlaufenden Zinkenträger mit deren Rechzinken verursachen. Wegen der Demontierbarkeit ist die gegenseitige Durchdringung von Mitnehmer- und Zuglasche mit einer Spielpassung versehen, welches dem problematischen spielvergrößernden Ausschlagen Vorschub leistet.

In der DE 197 46 216.2 ist ein analoger zweiteiliger Zinkenarm beschrieben. Er besteht ebenfalls aus einem ersten und einem zweiten Abschnitt, wobei der zweite äußere Abschnitt die Rechzinken trägt. Auch dieser Zinkenarm umfasst eine Schiebesitzverbindung, die von einer Verriegelungsanordnung, ausgeführt als Blattfeder, vollständig übergriffen wird, wobei die Blattfeder an ihrem freien Ende eine Bohrung aufweist, in die im verriegelten Zustand ein Bolzen einrastet. Diese Ausführung vermeidet es, die eigentliche Schiebesitzverbindung mit einer Querbohrung zu versehen, um den oben angesprochenen Nachteil einer Querbohrung im Schiebsitzbereich zu vermeiden. Die Verriegelungsanordnung ist dabei so ausgestaltet, dass diese an einem der beiden Abschnitte eines Zinkenarms außerhalb des Überdeckungsbereichs der Schiebesitzverbindung gehaltert ist und dabei den gesamten Überdeckungsbereich der Schiebesitzverbindung übergreift und am jeweils anderen Abschnitt in einer Verriegelungsanordnung festlegbar ist.

Die Weiterentwicklung von Kreiselschwadern insbesondere vor dem Hintergrund größer werdender Arbeitsbreiten und größerer Schwadkreiseldurchmesser, deren Belastung und Einsatzdauer im professionellen Anwendungsbereich stetig zunimmt führt dazu, dass die Anforderungen an die Dauerfestigkeit und damit insbesondere an die Gestaltfestigkeit derartiger Kupplungsverbindungen für abnehmbare Zinkenträger zunehmen. Insbesondere dann, wenn ein Teil der Zinkenarme für den Transport abgenommen werden soll, ist es zudem erforderlich, dass sich die Zinkenarme schnell und zuverlässig aus der Kupplungsverbindung herausnehmen bzw. kuppeln und verriegeln lassen.

Die Aufgabe der Erfindung ist es daher, eine Verriegelungseinrichtung zur Kupplung von zweiteiligen Zinkenarmen von Kreiselschwadern vorzuschlagen, die eine hohe Gestaltfestigkeit aufweist, und die dabei ohne zur Hilfenahme von Werkzeugen schnell und einfach lös- und verriegelbar ist.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Der Zinkenarm ist als Ganzes in bekannter Weise zweiteilig ausgebildet, wobei der radial innenliegende Teil im Lagergehäuse der dem Fachmann bekannten Schwaderglocke gelagert ist, die als rotierendes Gehäuse das Winkelgetriebe zum Antrieb des Schwadkreisels und auch die Kurvenbahn und die Steuerhebel zur Steuerung der Zinkenarme aufnimmt.

Die Drehmoment und Biegkräfte übertragende Kupplungsverbindung besteht aus einer an sich bekannten Kupplungshülse und einen Kupplungsschaft, die in der Betriebsstellung ineinander greifen, d.h. ineinander eingesteckt sind.

Dabei bildet der eigentliche Zinkenträger den außenliegenden Teil des Zinkenarms, der die Rechzinken aufnimmt. Diese Steckverbindung, bestehend aus Kupplungshülse und Kupplungsschaft ist dabei so ausgebildet und bemessen, dass sie gleichermaßen als Führungshülse in radialer Richtung bezogen auf die Kreiselachse des Schwadkreisels eine biegesteife Verbindung beider Teile untereinander und durch eine entsprechende Profilpaarung von Kupplunngshülse und Kupplungsschaft eine drehfeste Verbindung beider Teile, dem innenliegenden und dem außenliegenden Teil des Zinkenarms, umfasst.

Sollen diese beiden Funktionalitäten unter Einwirkung dynamisch wechselnder Belastungen dauerhaft ohne Verschleißerscheinungen gewährleistet sein, so verlangt dieses nach einer entsprechenden Qualität hinsichtlich der Werkstoffe und der Güte der Passungen im engen quasi spielfreien Toleranzbereich..

Daher ist es von besonderer Bedeutung, weitere Funktionalitäten, die auf die Dauerfestigkeit dieser Verbindung verschleißfördernd Einfluss nehmen können, von diesen Bauteilen möglichst fernzuhalten.

Dazu zählt unter anderem auch das Fernhalten von negativen Einflussgrößen, wie die Minderung der Gestaltfestigkeit durch Querbohrungen oder Duktilitätsstörungen durch Grobkornbildung in der Wärmeeinflußzone von Schweißnähten, die auch zur Rissbildung bei hohen Spannungsspitzen in der Schweißnaht führen können.

Dieses gilt um so mehr in dem hochbelasteten und daher für die Dauerfestigkeit kritischen Überdeckungsbereich der Steckkupplung.

Gemäß der Erfindung weist die Verriegelungseinrichtung ein Spannglied zur axialen Verspannbarkeit der zu verbindenden Teile, dann inneren Teil und dem äußeren Teil des Zinkenarms auf, welches einen Beitrag zur Erhöhung der dauerhaften Gestaltfestigkeit der Kupplungsverbindung liefert.

Nach einer weiteren Ausführung der Erfindung kann ein derartiges Spannglied als Klappbügel ausgebildet sein. In vorteilhafter Weise ergibt sich dabei zusätzlich auch eine Verbesserung der Handhabbarkeit und damit des Bedienungskomforts des Kuppelvorganges und dieses auch im Sinne der Verbesserung der Eigensicherheit der Kupplungsverbindung.

Vorzugsweise wird dieses Verriegelungselement durch einen Klappbügel aus Federstahldraht gebildet. Der Klappbügel ist dabei in einer Scharnierlagerung eines Widerlagers befestigt und kann dabei als Klappbügel zum Verriegeln und Verspannen über einen Anschlagbund hinweg geklappt werden.

Die Lage der Achse der Scharnierlagerung des Klappbügels ist dabei gegenüber der Kupplungsmuffe und dessen Längsachse so gewählt, dass der Klappbügel beim Einklappen eine Druckkraft auf die außenliegende Ringfläche der Anschlagschulter des Anschlagbunds ausüben kann, welches eine Vorschubbewegung auf den eingesteckten Zinkenträger bewirken kann, sofern dieser nicht bereits an der Kontaktfläche des Widerlagers, welche den Anschlag für das Erreichen der vollen Einstecklänge des Zinkenträgers bildet, anliegt.

Somit wird mit geringem manuellen Kraftaufwand durch die ohnehin erforderliche Betätigung des Klappbügels für den Verriegelungsvorgang, der Kontakt zwischen den Anschlägen, dem des Anschlagbunds und dem des Widerlagers hergestellt.

Die Ausgestaltung des Klappbügels ist dabei so, dass er das Zinkenarmrohr in seiner Verriegelungsposition an seinem Umfang teilweise umgreift, wobei sich der Griff des Klappbügels zur Verbringung in diese Verriegelungsposition öffnen, d.h. elastisch verformen muss, um eben das Zinkenarmrohr übergreifen zu können. Nach dem Übergreifen des Zinkenarmrohrs stellt sich eine Rückverformung des Griffs des Klappbügels ein, wodurch sich durch diese Umklammerung des Rohrquerschnitts des Zinkenarmrohrs gleichzeitig eine Sicherungswirkung gegen unbeabsichtigtes Lösen der Verriegelung durch unbeabsichtigte Betätigung des Klappbügels einstellt.

Ein weiterer Vorteil dieser Art der Verriegelung gegen unbeabsichtigtes Lösen des Klappbügels besteht darin, dass es keine Zwischenstufe der Endverriegelung des Klappbügels gibt, d.h. entweder ist die Verriegelung mit dem Zinkenarmrohr durch dessen Umklammerung richtig verrastet, oder der Klappbügel steht deutlich sichtbar in einer nicht abgesicherten Position, d.h. die Umklammerung hat überhaupt nicht stattgefunden. Die nicht verriegelte Lage des Klappbügels ist dadurch deutlich erkennbar, indem der Klappbügel dann nämlich oberhalb des Zinkenarmes aufliegt.

Auch darin liegt ebenfalls ein erfinderischer Vorteil, der darin besteht, dass hierdurch im Falle einer nicht ordnungsgemäßen Verriegelung ein eindeutig wahrnehmbares Unterscheidungsmerkmal gegenüber der Verrieglungsstellung existiert. Dieses stellt somit auch einen Beitrag zur Erhöhung der Eigensicherheit der Verriegelungseinrichtung dar.

Nähere Einzelheiten der Erfindung sind den nachfolgenden Figurendarstellungen und deren Beschreibungen zu entnehmen.

Es zeigen:

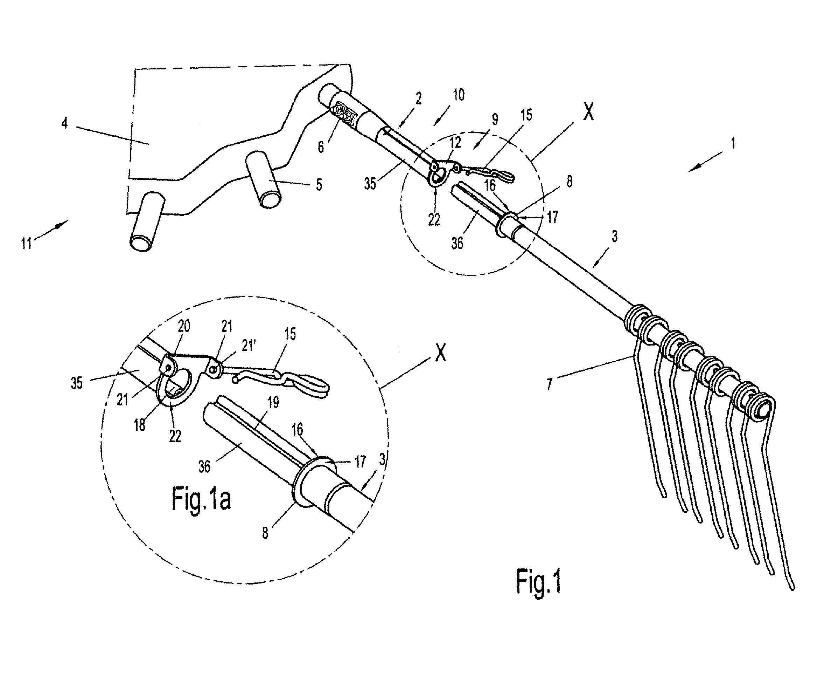

- Fig. 1: zeigt einen Zinkenarm in der Situation vor dem Zusammenstecken mit offener Verriegelungseinrichtung
- Fig. 1 a: Vergrößerung der Einzelheit X in Fig. 1
- Fig. 2: zeigt den Zinkenarm gemäß Fig.1 in der Situation nach dem Zusammenstecken mit geschlossener Verriegelungseinrichtung
- Fig. 2a: Vergrößerung der Einzelheit X in Fig. 2
- Fig. 3: zeigt einen Zinkenarm in der Situation vor dem Zusammenstecken mit offener Verriegelungseinrichtung nach dem Klappbügelprinzip
- Fig. 3a: Vergrößerung der Einzelheit X in Fig. 3
- Fig. 4: zeigt den Zinkenarm gemäß Fig.3 in der Situation nach dem Zusammenstecken mit geschlossener Verriegelungseinrichtung
- Fig.4a: Vergrößerung der Einzelheit X in Fig. 4
- Fig.5: zeigt einen Zinkenarm in der Situation vor dem Zusammenstecken mit offener Verriegelungseinrichtung nach einem anderen Klappbügelprinzip
- Fig.5a: Vergrößerung der Einzelheit X in Fig. 5
- Fig.6: zeigt den Zinkenarm gemäß Fig.5 in der Situation nach dem Zusammenstecken mit geschlossener Verriegelungseinrichtung
- Fig.6a: Vergrößerung der Einzelheit X in Fig. 6
- Fig.7: ein Ausführungsbeispiel analog Fig.3 nach dem Umkehrprinzip
- Fig.7a: Vergrößerung der Einzelheit X in Fig. 7
- Fig.8: ein Ausführungsbeispiel analog Fig.4 nach dem Umkehrprinzip
- Fig.8a: Vergrößerung der Einzelheit X in Fig. 8

Fig. 1 zeigt einen Ausschnitt aus einem Schwadkreisel 11 mit einem noch nicht montierten Zinkenarm 1 in der Situation vor dem Zusammenstecken des äußeren Teils des Zinkenarms 3 ausgebildet als Zinkenträger mit der noch offenen Verriegelungseinrichtung 9 und noch nicht eingelegtem Sicherungselement 15.

Der Zinkenarm 1 als Ganzes ist in bekannter Weise in der Schwaderglocke 4 geführt und gelagert. Der Schwadkreisel 11 besteht aus der Schwaderglocke 4 mit dem darin enthaltenen Winkelgetriebe und der Kurvenbahnsteuerung, welche während des Umlaufs der Rechzinken 7 um die Kreiselachse des Schwadkreisels 11 die Zinkenarme 1 hinsichtlich ihrer Rechfunktion steuert. Der besseren Übersicht halber wurde nur ein Zinkenarm 1 des Schwadkreisels 11 dargestellt, wobei ein Schwadkreisel 11 beispielsweise dreizehn derartige Zinkenarme 1 umfassen kann.

Der Zinkenarm 1 besteht im Wesentlichen aus einem inneren Teil 2 und dem äußeren Teil 3 des Zinkenarms 1, den Rechzinken 7 und der Verriegelungseinrichtung 9. Dabei ist der innere Teil 2 mit den aus der Schwaderglocke 4 herausragenden von der Kurvenbahn gesteuerten Abtriebswellen 5 drehfest, beispielsweise mittels einer Schraubverbindung 6 verbunden.

Die Verriegelungseinrichtung 9 besteht im Wesentlichen aus der Kupplungseinrichtung 10, bestehend aus der Kupplungshülse 35 und dem Kupplungsschaft 36, dem Widerlager 12, dem Anschlagbund 8 und dem Sicherungselement 15.

Die Kupplungshülse 35 ist als Schiebesitzkupplung mit eingepressten Tangentialsicken 18 ausgebildet, die dazu dienen, ein Drehmoment zu übertragen.

In dem dargestellten Ausführungsbeispiel ist der äußere Teil 3 - der eigentliche Rechzinken 7 tragende Zinkenträger - als Rohr ausgebildet, wobei der Teil des Zinkenträgers 3, der als Kupplungsschaft 36 ausgebildet ist, in den Kupplungsbereich der Kupplungshülse 35 eingeführt wird, ebenfalls mit eingepressten Tangentialsicken 19 ausgestaltet ist. Der Teil des Rohres des Zinkenarms, der den Kupplungsschaft 36 bildet, mit den darin eingepressten Tangentialsicken 19, bildet somit das komplementäre Profil zur Kupplungshülse 35.

Endseitig ist der Zinkenträger 3 mit vier Rechzinken 7 bestückt. Der Zinkenträger ist dem Ausführungsbeispiel mit einem Anschlagbund 8 fest verbunden, der beispielsweise aufgepresst oder aufgeschrumpft sein kann. Der Anschlagbund umfasst zwei Anschlagschultern, die vordere Anschlagschulter 16 und die hintere Anschlagschulter 17.

Die Kupplungshülse 35 ist an ihrem äußeren stirnseitigen Ende mit einem Widerlager 12 fest verbunden, beispielsweise mit diesem verschraubt oder verschweist. Das Widerlager 12 ist dabei so ausgestaltet, dass es wenigstens zwei sich gegenüberliegende Laschen 20, mit Durchgangsbohrungen 21,21' aufweist. Die Durchgangsbohrungen 21,21' dienen zur Aufnahme des eigentlichen Sicherungselementes 15, beispielsweise einer Stiftverbindung oder zur Lagerung eines Klappbügels, welcher den beweglichen Teil der Verriegelungseinrichtung 9 darstellt.

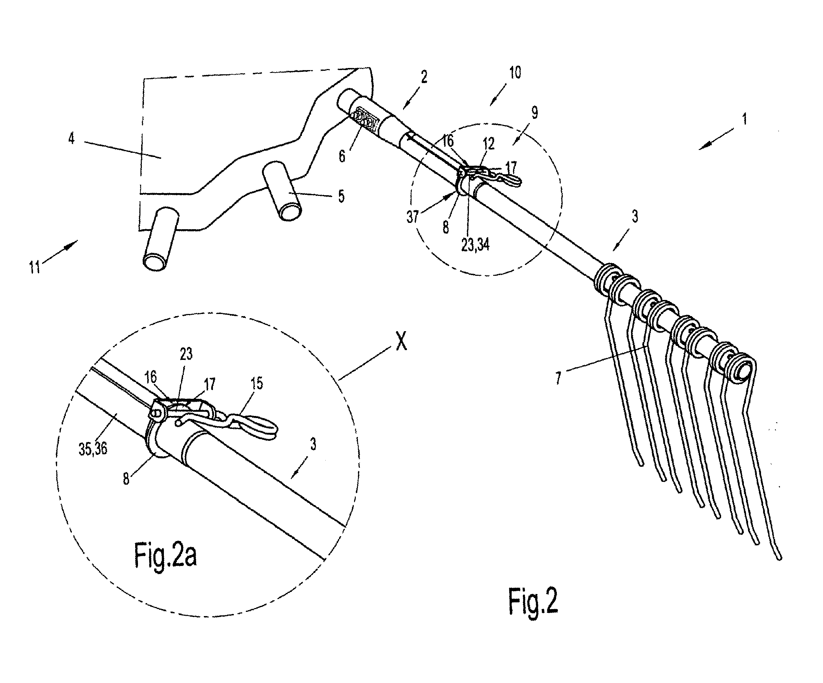

Fig. 2 zeigt einen Ausschnitt aus einem Schwadkreisel 11 gemäß Fig.1 mit einem montierten Zinkenarm 1 in der Situation nach dem Zusammenstecken des Kupplungsschaftes 36 des Zinkenträgers 3 in die Kupplungshülse 35 der Kupplungseinrichtung 10 mit geschlossener Verriegelungseinrichtung 9, d.h. mit eingelegtem Sicherungselement 15.

In dieser montierten Stellung liegt der Anschlagbund 8 mit seiner vorderen Anschlagschulter 16 an der Anschlagfläche 22 des Wiederlagers 12 an, wobei diese Kontaktflächen, Anschlagfläche 22 und vordere Anschlagschulter 16 die axiale Übergangsfuge 37 zwischen dem gekuppelten inneren Teil 2 und dem äußeren Teil 3 des Zinkenarms bilden. Das Sicherungselement 15, beispielsweise ausgebildet als Federstecker, ist von den Durchgangsbohrungen 21,21' aufgenommen und gehaltert. Gleichzeitig liegt der gerade Schaft des Federsteckers als Sicherungsstift 23 an der hinteren Anschlagschulter 17 an, so dass der Zinkenträger in seiner Lage fixiert und verriegelt ist.

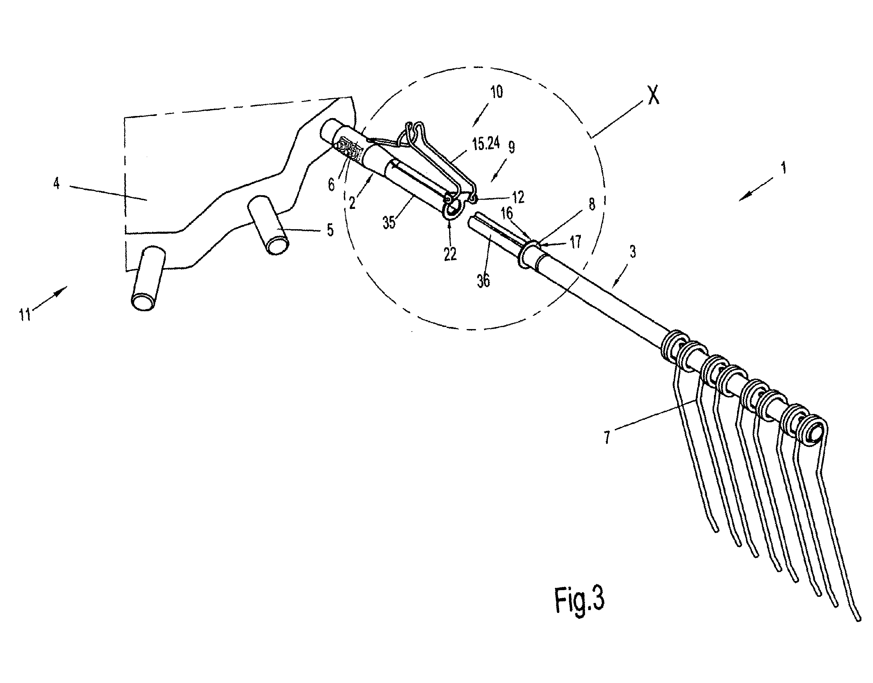

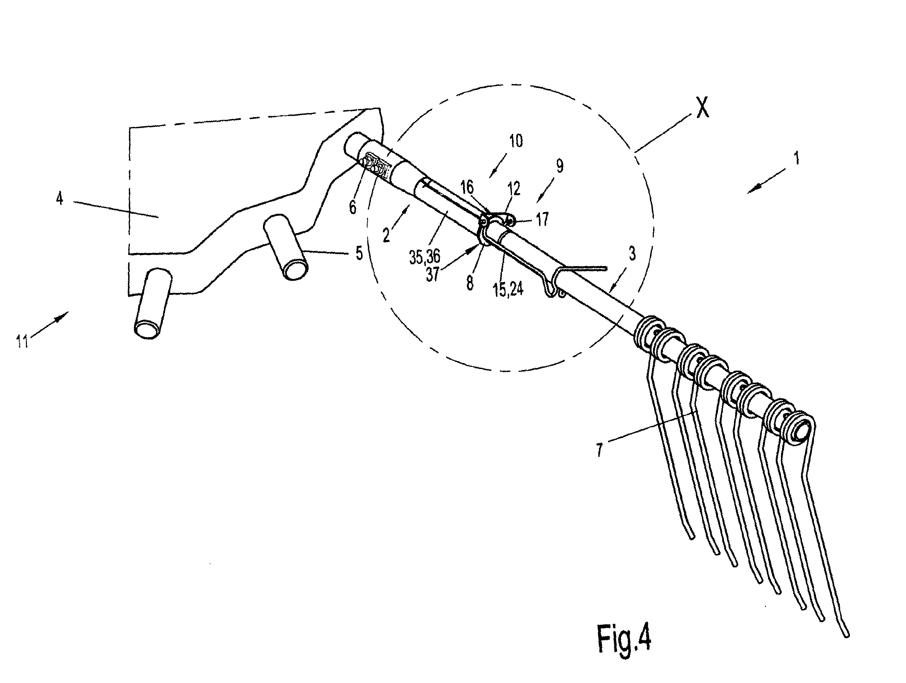

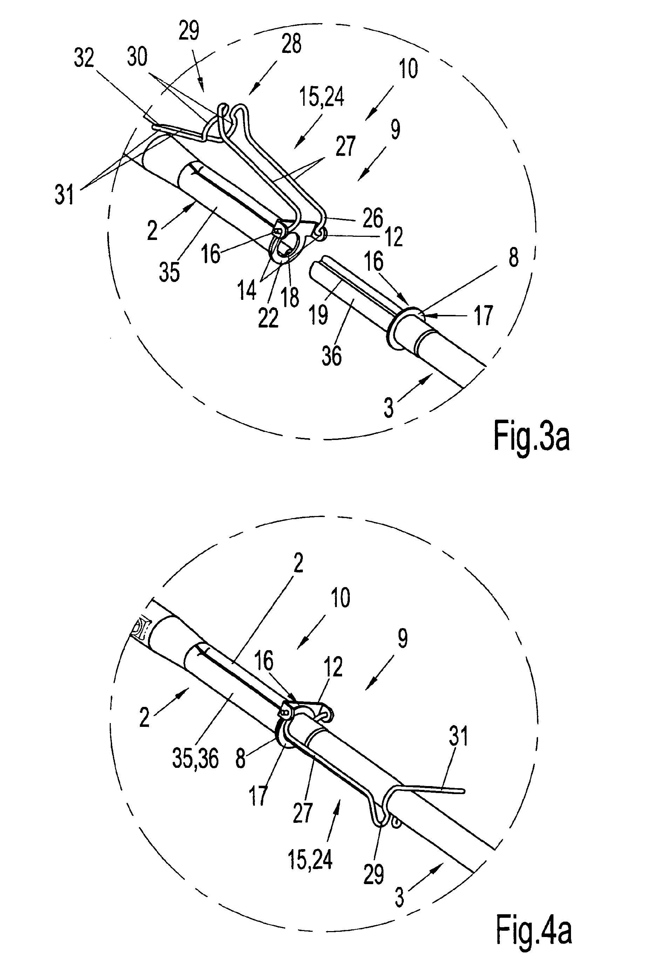

Die Figuren Fig. 3 und Fig.4 zeigen ein weiteres alternatives Ausführungsbeispiel einer Verriegelungseinrichtung 9 in Form eines Klappbügelverschlusses, und zwar zeigt Fig.3 die geöffnete und Fig.4 die verriegelte Stellung. Die Figuren Fig. 3a und Fig.4a zeigen vergrößerte Ausschnitte der Einzelheiten "X" der Figuren Fig.3 bzw. Fig.4.

Fig. 3 zeigt einen Ausschnitt aus einem Schwadkreisel 11 mit einem noch nicht montierten Zinkenarm 1 in der Situation vor dem Zusammenstecken des äußeren Teils des Zinkenarms 3, (Zinkenträger) mit der noch offenen Verriegelungseinrichtung 9 und noch nicht eingelegtem Sicherungselement 15, wobei das Sicherungselement 15 als klappbares Element bzw. als Klapp- und Überwurfbügel 24 ausgebildet ist. Der Klapp- und Überwurfbügel 24 ist in seiner geöffneten, d.h. zurück geklappten Stellung dargestellt. Gelagert ist der beispielsweise aus Federstahldraht bestehende Klapp- und Überwurfbügel 24 in den Durchgangsbohrungen 21,21' des Widerlagers 12.

Fig. 4 zeigt einen Ausschnitt aus einem Schwadkreisel 11 gemäß Fig.3 mit einem montierten Zinkenarm 1 in der Situation nach dem Zusammenstecken des Zinkenträgers 3 in die Kupplungseinrichtung 10 mit geschlossener Verriegelungseinrichtung 9, d.h. mit eingelegtem Sicherungselement 15.

Der Klapp- und Überwurfbügel 24 ist dabei in seiner geschlossenen. d.h. eingeklappten Stellung dargestellt, wobei der Klappbügel 24 einen Teil des Rohrumfangs des äußeren Zinkenarms 3 umklammert, welches seine Verriegelungsposition definiert.

Der Klappbügel 24 ist vorzugsweise aus vergütetem Federstahldraht hergestellt. Er besteht im Wesentlichen aus den angeformten Scharnierzapfen, den sich anschließenden Rundschenkeln 26, den Längsschenkeln 27 die im hinteren Teil 28 nach abgekröpft sind und denen sich der Umfassungsbereich 29 mit den gerundeten Umfassungsschenkeln 30 anschließt, und wobei sich den gerundeten Umfassungsschenkeln 30 ein aufsteigender gerader Schenkel 31 anschließt, die letztlich durch ein Brückenglied 32 untereinander verbunden sind. Die beiden geraden Schenkel 31 in Verbindung mit dem Brückenglied, welches diese verbindet, stellen praktisch einen Handgriff zur Betätigung des Klappbügels 27 dar.

Der dargestellte Klappbügel 24 ist somit ein monolithisches, beispielsweise aus Federstahldraht, durch reine Biegevorgänge herstellbares kostengünstiges Teil, welches somit einen besonderen wirtschaftlichen Vorteil beinhaltet.

Die Scharnierzapfen des Klappbügels 24 lassen sich durch einfaches Zusammendrücken der Längsschenkel 27 in die Durchgangsbohrungen 21,21' von dem Widerlager 12, welches fest mit der Kupplungshülse 2 in Verbindung steht, einführen. Damit ist der Klappbügel 24 in den Durchgangsbohrungen 21,21' als Lagerbohrungen scharniert und kann um die Figurenachse der Durchgangsbohrungen 21,21' verschwenkt werden.

Die Lagerung und Ausgestaltung des Klappbügels 24 machen es möglich, dass, sobald der äußere Teil 2 des Zinkenarms gemäß Fig. 4 in die Kupplungshülse 35 hinreichend weit eingesteckt ist, der Klappbügel 24 aus seiner zurückgeklappten in die Verriegelungsposition verklappt werden kann. Dabei kommen die Rundbügel 26 des Klappbügels 24 an der hinteren Anschlagschulter 17 des Anschlagbunds 8 zur Anlage. Liegt dabei die vordere Anschlagschulter 16 noch nicht an der Anschlagfläche 22 an, so kann unter Einwirkung der Hebelkraft, die von dem handbetätigten Klappbügel ausgeht, durch die so erzeugte Vorschubkraft die Vorschubbewegung bis zum endgültigen Anschlagkontakt unterstützt werden.

Dabei ist durch die Geometrie die Verformbarkeit des Klappbügels 24 so bemessen, dass durch weiteres Betätigen des Klappvorgangs in Richtung der Verriegelungsposition eine Druckkraft in Längsrichtung des Zinkenarms 3 auf die Kontaktfläche zwischen der Kupplungshülse 35 und der Anschlagschulter 16 des äußeren Zinkenarms 3 aufgebracht wird. Dieses verursacht somit eine axiale Vorspannkraft, welche als Druckkraft auf die ineinander gesteckten Teile des Zinkenarms 1, nämlich auf die Kontaktfläche zwischen der Anschlagfläche 22 des Widerlagers 12 und der vorderen Anschlagschulter 16 des Anschlagbunds 8 einwirkt.

Dabei verklammert sich der Klappbügel 24 in der Verriegelungsposition mit seinen Umfassungsschenkeln 30 um den Rohrschaft des Zinkenträgers 3, indem er in der Verriegelungsposition den Rohrquerschnitt des Zinkenträgers 3 umgreift, so dass der Klappbügel sich durch die Umklammerung in einer eigensicheren und damit gesicherten Position befindet. Zudem stellt diese Art einer Verriegelungseinrichtung 9 dabei ein axiales Spannglied dar.

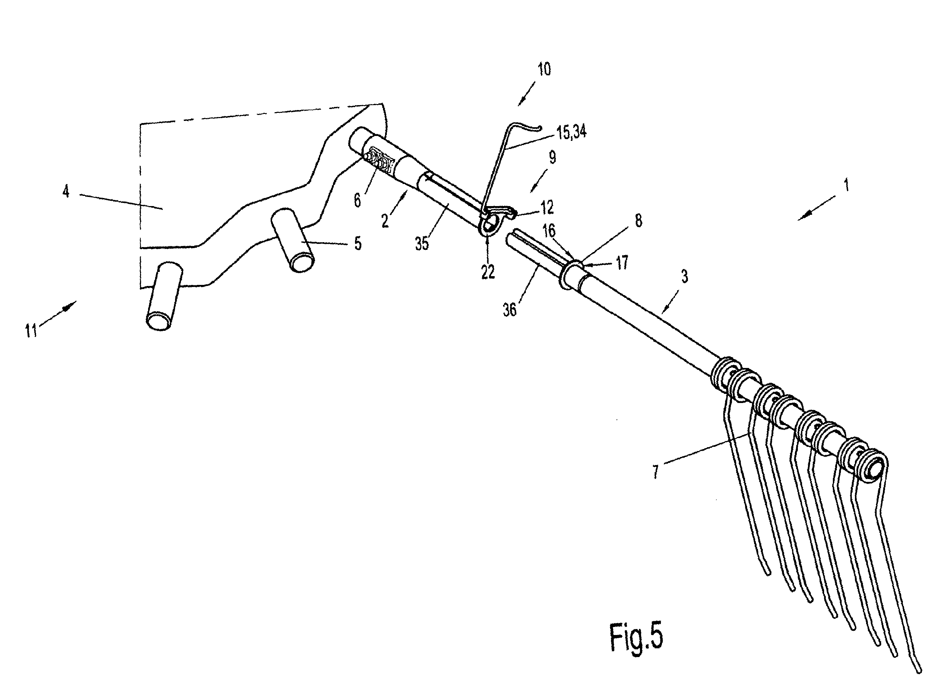

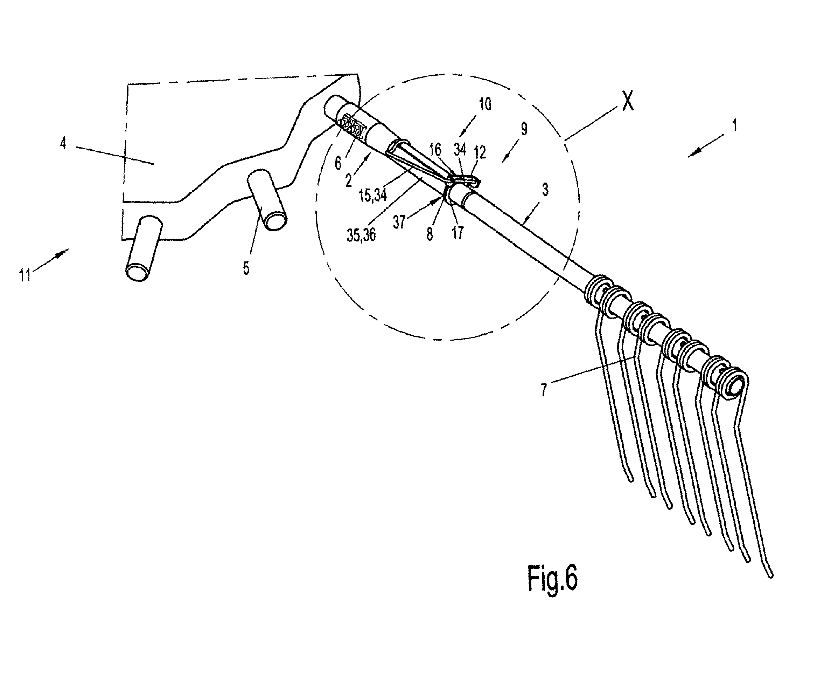

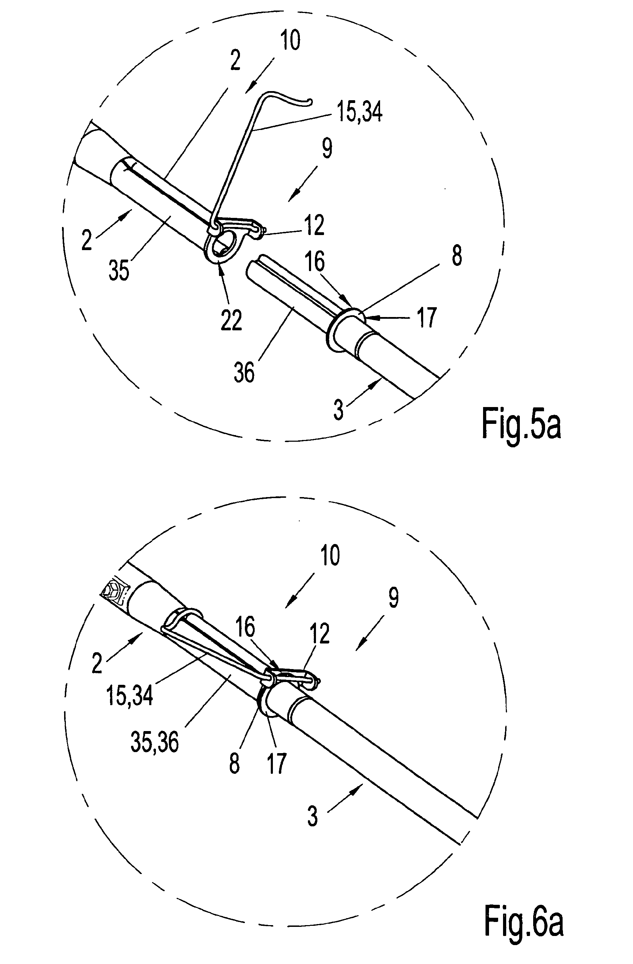

Die Figuren Fig. 5 und Fig.6 zeigen ein weiteres alternatives Ausführungsbeispiel einer Verriegelungseinrichtung 9 eines Klappbügelverschlusses, und zwar zeigt Fig.5 die geöffnete und Fig.6 die verriegelte Stellung. Die Figuren Fig. 5a und Fig.6a zeigen vergrößerte Ausschnitte der Einzelheiten "X" der Figuren Fig.5 bzw. Fig.6.

In diesem Ausführungsbeispiel ist der Klappbügel 34 als Sicherungselement 15 ebenfalls in den Durchgangsbohrungen 21,21' gelagert, wobei der Teil des Klappbügels 34, der sich zwischen den Laschen 20 erstreckt, zweifach verköpft ist und somit als Klappbügel 34 mit Exzenterfunktion ausgebildet ist.

Diese Exzenterfunktion ermöglicht es, den Kupplungsschaft 36 des Zinkenträgers 3 mit der geöffneten Verriegelung ungehindert in die Kupplungshülse 35 einzuführen, wobei sich der exzentrische Teil des Klappbügels 34 nach dem rückwärtigen Verklappen in die Verriegelungsposition wie ein Sicherungsstift an der hinteren Anlageschulter 17 des Anschlagbunds 8 anlegt.

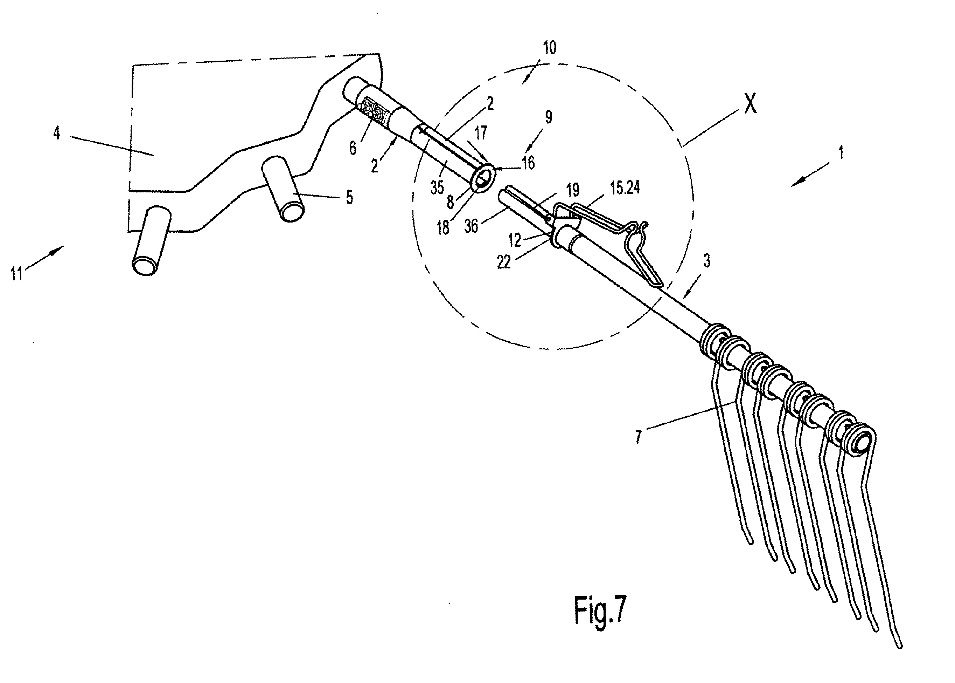

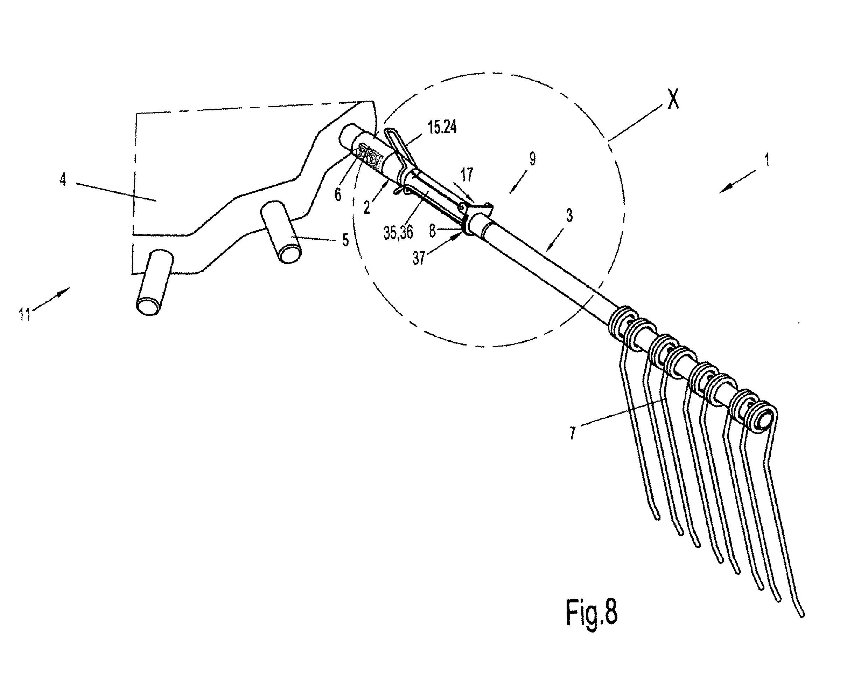

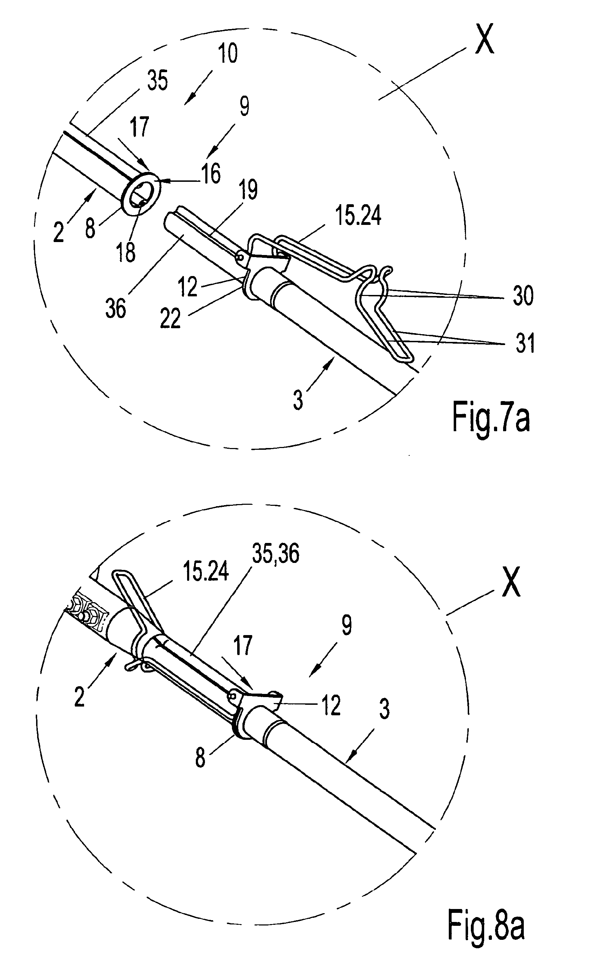

Es liegt im Können und Wissen eines Fachmanns, die Erfindung auch im Sinne des Umkehrprinzips anzuwenden. Die Figuren Fig.7 und Fig.8 zeigen ein Ausführungsbeispiel analog Fig.3 bzw. Fig. 4 nach einem denkbaren Umkehrprinzip, indem der Anschlagbund 8 nunmehr der Kupplungshülse 35 und das Widerlager 12 dem Zinkenträger 3 zugeordnet ist. Fig.7a bzw. Fig.8a zeigen die Einzelheiten X als Vergrößerungen der Figuren Fig. 7 bzw. Fig.8.

Weitere Umkehrprinzipien können auch dadurch realisiert werden, indem beispielsweise die Kupplungshülse 35 dem äußeren Teil des Zinkenarms 3 und der Kupplungsschaft 36 dem inneren Teil des Zinkenarms zugeordnet werden.

### Bezugszeichenliste

- 1: Zinkenarm
- 2: innerer Teil des Zinkenarms
- 3: äußerer Teil des Zinkenarms (Zinkenträger)
- 4: Schwaderglocke
- 5: Abtriebwelle
- 6: Schraubverbindung
- 7: Rechzinken
- 8: Anschlagbund
- 9: Verriegelungseinrichtung
- 10: Kupplungseinrichtung
- 11: Schwadkreisel
- 12: Widerlager
- 14: Absteckbohrungen
- 15: Sicherungselement
- 16: vordere Anschlagschulter
- 17: hintere Anschlagschulter
- 18: eingepresste Tangentialsicke
- 19: eingepresste Tangentialsicke
- 20: Lasche
- 21,21': Durchgangsbohrung
- 22: Anschlagfläche
- 23: Sicherheitsstift
- 24: Klappbügel
- 26: Rundbügel
- 27: Längsschenkel
- 28: Hinterer Teil
- 29: Unfassungsbereich
- 30: Umfassungsschenkel
- 31: gerader Schenkel (Handgriff)
- 32: Brückenglied
- 34: Klappbügel
- 35: Kupplungshülse
- 36: Kupplungsschaft
- 37: axiale Übergangsfuge

## Patentansprüche

1. Heuwerbungsmaschine, insbesondere Kreiselschwader, mit wenigstens einem um eine aufrechte Kreiselachse umlaufenden Schwadkreisel mit gesteuerten Rechzinken (7) aufweisenden Zinkenarmen (1), die in Traglagern eines umlaufenden Kreiselgehäuses gelagert sind und wobei wenigstens einer der Zinkenarme (1) zumindest aus zwei lösbar miteinander verbundenen Teilen, einem dem Kreiselgehäuse (4) zugewandten inneren Teil (2) und einem den Rechzinken (7) aufnehmenden äußeren Teil (3) besteht, die in einer Drehmoment übertragenden Schiebsitzverbindung, ausgebildet als Kupplungseinrichtung (10), ineinandersteck- oder demontierbar sind, und wobei die Kupplungseinrichtung (10) eine axiale Übergangsfuge vom inneren (2) zum äußeren Teil (3) aufweist, wobei beide Teile (2 und 3) durch eine Verriegelungseinrichtung (9) in der Betriebsstellung gegeneinander verriegelbar sind, **dadurch gekennzeichnet, dass** die Verriegelungseinrichtung (9) ein Spannglied zur axialen Verspannbarkeit der zu verbindenden Teile, dem inneren Teil (2) und dem äußeren Teil (3) des Zinkenarms (1) aufweist.

2. Heuwerbungsmaschine nach Anspruch 1 **dadurch gekennzeichnet, dass** das Spannglied der Verriegelungseinrichtung (9) werkzeuglos betätigbar ist.

3. Heuwerbungsmaschine nach Anspruch 2 **dadurch gekennzeichnet, dass** das Spannglied der Verriegelungseinrichtung (9) als Klappbügel (26,34) ausgebildet ist.

4. Heuwerbungsmaschine nach Anspruch 1 in Verbindung mit einem oder mehreren der vorhergehenden Ansprüche, **dadurch gekennzeichnet, dass** das Spannglied als Klappbügel (26,34) in einem Widerlager (12) ausgebildet als Scharnierlager klappbar gelagert ist.

5. Heuwerbungsmaschine nach Anspruch 4 in Verbindung mit einem oder mehreren der vorhergehenden Ansprüche, **dadurch gekennzeichnet, dass** das Widerlager (12) als Scharnierlager ausgebildet ist.

6. Heuwerbungsmaschine nach einem der Ansprüche 3 oder 4 in Verbindung mit einem oder mehreren der vorhergehenden Ansprüche, **dadurch gekennzeichnet, dass** der Klappbügel (26,34) aus Federstahlrundmaterial besteht.

7. Heuwerbungsmaschine nach einem der Ansprüche 3 oder 4 in Verbindung mit einem oder mehreren der vorhergehenden Ansprüche, **dadurch gekennzeichnet, dass** der Klappbügel (26,34) in der Verriegelungsposition eine hintere Anschlagschulter (17) des äußeren Teils (3) des Zinkenarms (1) festlegt.

8. Heuwerbungsmaschine nach einem der Ansprüche 3 oder 4 in Verbindung mit einem oder mehreren der vorhergehenden Ansprüche, **dadurch gekennzeichnet, dass** zumindest ein Teil des Klappbügels (26,34) in der Verriegelungsposition einen Teil des Rohrquerschnitts des Zinkenarmes (2) umgreift.

## Claims

1. A hay-making machine, in particular a rotary swather, with at least one swathing rotor which is rotatable about a vertical rotor axis and having controlled tine arms (1) which have raking tines (7) and which are mounted in carrier mountings of a rotating rotor housing and wherein at least one of the tine arms (1) comprises at least two releasably interconnected parts, an inner part (2) towards the rotor housing (4) and an outer part (3) receiving the raking tines (7), which can be fitted into each other or dismantled in a torque-transmitting sliding fit connection in the form of a coupling device (10) and wherein the coupling device (10) has an axial transitional join from the inner (2) to the outer part (3), wherein the two parts (2 and 3) are lockable relative to each other in the operative position by a locking device (9), **characterised in that** the locking device (9) has a clamping member for axial clampability of the parts to be connected, the inner part (2) and the outer part (3) of the tine arm (1).

2. A hay-making machine according to claim 1 **characterised in that** the clamping member of the locking device (9) is actuable without a tool.

3. A hay-making machine according to claim 2 **characterised in that** the clamping member of the locking device is in the form of a pivotable hoop (26, 34).

4. A hay-making machine according to claim 1 in conjunction with one or more of the preceding claims **characterised in that** the clamping member in the form of a pivotable hoop (26, 34) is pivotably mounted in a support (12) in the form of a hinge mounting.

5. A hay-making machine according to claim 4 in conjunction with one or more of the preceding claims **characterised in that** the support (12) is in the form of a hinge mounting.

6. A hay-making machine according to one of claims 3 and 4 in conjunction with one or more of the preceding claims **characterised in that** the pivotable hoop (26, 34) comprises round spring steel material.

7. A hay-making machine according to one of claims 3 and 4 in conjunction with one or more of the preceding claims **characterised in that** in the locking position the pivotable hoop (26, 34) fixes a rear abutment shoulder (17) of the outer part (3) of the tine arm (1).

8. A hay-making machine according to one of claims 3 and 4 in conjunction with one or more of the preceding claims **characterised in that** at least a part of the pivotable hoop (26, 34) in the locking position embraces a part of the tubular cross-section of the tine arm (2).

## Revendications

1. Faneuse, en particulier andaineuse rotative, comprenant au moins un andaineur tournant autour d'un axe vertical et présentant des bras (1) portant des pointes de fanage (7) commandées, ces bras à pointes étant montés dans des paliers porteurs d'un boîtier d'andaineur rotatif, et au moins un de ces bras étant composé d'au moins deux parties reliées entre elles de manière séparable, à savoir une partie interne (2) située du côté du boîtier (4) et une partie externe (3) qui accueille les pointes de fanage (7), ces parties (2) et (3) pouvant être commandées ou démontées dans le cadre d'une liaison coulissante transmettant un couple, constituée par un dispositif d'accouplement (10) qui présente une jonction de raccordement de la partie interne (2) et de la partie externe (3), ces deux parties pouvant en position de service être verrouillées l'une sur l'autre par l'intermédiaire d'un dispositif de verrouillage (9), cette faneuse étant **caractérisée en ce que** le dispositif de verrouillage (9) présente un organe de serrage pour assurer le maintien axial des parties à relier, à savoir la partie interne (2) et la partie externe (3) du bras à pointes (1).

2. Faneuse selon la revendication 1, **caractérisée en ce que** l'organe de serrage du dispositif de verrouillage (9) peut être actionné sans outil.

3. Faneuse selon la revendication 2, **caractérisée en ce que** l'organe de serrage du dispositif de verrouillage (9) a la forme d'un étrier basculant (26, 34).

4. Faneuse selon la revendication 1, **caractérisée en ce que** l'organe de serrage en forme d'étrier basculant (26, 34) peut basculer dans un contre-appui (12) en forme de palier à charnière.

5. Faneuse selon la revendication 4, en liaison avec une ou plusieurs des revendications précédentes, **caractérisée en ce que** le contre-appui (12) est un palier à charnière.

6. Faneuse selon la revendication 1, en liaison avec une ou plusieurs des revendications précédentes, **caractérisée en ce que** l'étrier basculant (26, 34) est constitué d'un profilé rond en acier à ressort.

7. Faneuse selon la revendication 1, en liaison avec une ou plusieurs des revendications précédentes, **caractérisée en ce que** l'étrier basculant (26, 34) en position de verrouillage, bloque par l'arrière un épaulement de butée (17) que porte la partie externe (3) du bras à pointes (1).

8. Faneuse selon la revendication 1, en liaison avec une des revendications 3 et 4, **caractérisée en ce qu'**au moins une partie de l'étrier basculant (26, 34) en position de verrouillage, enveloppe une partie de la section tubulaire du bras à pointes (2).
